Europäisches Patentamt

**European Patent Office**

**Office européen des brevets**

(19)

(11) Numéro de publication:

**0 070 747**
**A1**

(12)

# DEMANDE DE BREVET EUROPEEN

(21) Numéro de dépôt: **82401137.3**

(22) Date de dépôt: **22.06.82**

(51) Int. Cl.³: **F 24 J 3/02**

(30) Priorité: **20.07.81 FR 8114502**

(43) Date de publication de la demande: **26.01.83**
**Bulletin 83/4**

(84) Etats contractants désignés: **AT BE CH DE FR GB IT LI LU NL SE**

(71) Demandeur: **Antona, Pancrace, 6 rue Roi de Rome, F-20000 Ajaccio (Corse du Sud) (FR)**

(72) Inventeur: **Antona, Pancrace, 6 rue Roi de Rome, F-20000 Ajaccio (Corse du Sud) (FR)**

(54) **Capteur solaire plan à effet de concentration et de serre.**

(57) Capteur solaire du type «plan» recueillant la chaleur émise par le rayonnement solaire diffus, et le rayonnement direct, en concentrant ce dernier.

Il est à double effet de serre et de concentration.

Il se compose d'un caisson de protection (1), fermé par un vitrage (2) sur la face insolée.

A l'intérieur du caisson sont installés des tubes capteurs cylindriques (4), dont la demi-face avant (4bis) est transparente, et la demi-face arrière est réfléchissante (4ter) noyée dans un isolant (3).

Les tubes capteurs cylindriques (4) sont placés cote à cote, et enveloppent concentriquement des tubes à ailettes (5), eux-mêmes reliés aux tubes collecteurs du fluide ou gaz froid (6) et réchauffé (7).

La demi-face arrière réfléchissante des capteurs (4ter) a pour fonction de renvoyer les rayons solaires qui l'ont atteinte vers les faces arrières des tubes absorbeurs à ailettes (5).

La surchauffe sur les faces arrières des absorbeurs (5) provoque une montée plus rapide de la température grâce à la focalisation des rayons solaires.

L'utilisation de ce dispositif est essentiellement envisagée pour les besoins de l'habitat dans les domaines de la production d'eau chaude sanitaire, et le chauffage des locaux.

ACTORUM AG

- 1 -.

## DESCRIPTION

Capteur solaire plan à effet de concentration et de serre

La présente invention concerne les dispositifs utilisant l'énergie solaire pour la production de fluide ou gaz chaud.

Les principaux capteurs plans existants à effet de serre, sont réalisés principalement avec un matériel qui a pour objectif de capter la chaleur radiante émise par la voûte céleste, à l'aide d'un absorbeur de teinte sombre sur toute sa surface de captage.

Ces capteurs sont sans effet de concentration, ne permettant pas l'élévation de la température du fluide ou du gaz caloporteur pour un apport solaire équivalent.

Le capteur solaire plan selon l'invention permet d'obtenir en plus de l'effet de serre, un effet de concentration sans besoin d'éléments ou d'organes sophistiqués.

Avec les éléments simples qui le composent, il recueille les calories dispensées par la voûte céleste et le rayonnement direct du soleil.

Il est constitué pour être utilisé avec des fluides caloporteurs permettant le stockage ou l'utilisation directe des calories. Mais, il peut également fonctionner avec des gaz ou tout simplement de l'air ambiant naturel, en dimensionnant de manière appropriée les différents éléments qui le constituent, avec une adaptation pour l'un ou l'autre des cas.

Il est prévu principalement pour être utilisé dans les constructions (résidentielles et tertiaires) aux fins d'une production de chaleur réchauffant un fluide ou un gaz, qui deviendra lui-même une source utilitaire dans le domaine que l'on voudra lui attribuer (eau chaude sanitaire, chauffage des locaux).

Le capteur se compose d'un caisson de protection classique, formé par un vitrage de protection sur la face insolée.

A l'intérieur de ce caisson, sont installés des tubes capteurs cylindriques élémentaires (constitués de deux demi-cylindres placés face à face et contiguës sur leurs bords) dont la demi-face avant (près du vitrage de protection) est transparente, et la demi-face arrière est réfléchissante (traitée d'une manière spéculaire du côté intérieur de la courbure).

- 2 -

Cette demi-face arrière des capteurs cylindriques est noyée dans un matèriau isolant d'épaisseur variable.

Les tubes capteurs cylindríques sont placés côte à côte d'une façon identique par rapport au plan du capteur géñéral, et enveloppent concentriquement des tubes absorbeurs à ailettes, eux-mêmes reliés au tube collecteur d'amenée du fluide froid et au tube collecteur de départ du fluide réchauffé.

La surface réfléchissante (demi-face arrière des capteurs cylindriques) a pour fonction de renvoyer les rayons solaires qui l'ont atteinte vers les faces arrières des tubes absorbeurs à ailettes.

La surchauffe ainsi produite sur les faces arrières des tubes absorbeurs provoque une montée en température plus rapide (deux faces insolées au lieu d'une) et une élévation de la température dûe à la focalisation des rayons solaires sur ces absorbeurs.

La caractèristique essentielle de cette fonction réside dans la performance obtenue pendant la basse saison en période hivernale.

En variante,ce capteur pourra être équipé d'un double vitrage de protection,séparé par une lame d'air,et pourra également fonctionner sans l'utilisation obligatoire des demi-cylindres ou demi-coquilles supérieurs transparents.

0070747

-3-

## REVENDICATIONS

1 - Capteur solaire plan,constitué d'un caisson de protection(1)d'un vitrage de protection(2)pouvant être réalisé en produit de synthèse,caractérisé par une batterie d'éléments capteurs disposés cote à cote en parallèle à l'intérieur du caisson(1).

Ces éléments capteurs sont caractérisés en premier lieu par des absorbeurs en tubes avec ailettes(5), qui sont les éléments prépondérants de ces capteurs élémentaires.

Ces tubes avec ailettes(5)sont coaxiaux à deux demi-cylindres placés face à face et contigües sur leurs bords(4).Les demi-cylindres avant sont transparents (4bis),et les demi-cylindres arrières sont réfléchissants (4ter).

Ces deux éléments semi-cylindriques ( constitués éventuellement par des coquilles(11) et (12) seront accolés et liés par des profilés de jonction(8).

Un isolant(3)moulé entre l'extrados des éléments semi-cylindriques arrières(4ter)(ou la coquille arrière(12)) réfléchissants et le caisson,limitera les pertes thermiques.

L'isolant(3)remonte jusqu'au système de maintien du vitrage de protection(2),et forme quatre plans inclinés(9)encadrants les éléments capteurs.Ces plans inclinés seront réfléchissants.

2 - Capteur solaire selon la revendication 1,carractérisé par le fait qu'il permet d'obtenir dans une position donnée fixe,un effet de serre et un effet de concentration des rayons solaires incidents et réfléchis.

- 4 -

Ces deux données climatiques pour un lieu donné:rayonnement direct et rayonnement diffus de la voûte céleste,sont traitées à parts égales en fonction de leurs valeurs par:l'importance du nombre,de la surface,et de la dispositions des ailettes des absorbeurs de calories(5).

3 - Capteur solaire selon les revendications 1 et 2,caractérisé par le fait que l'on obtient des températures plus élevées dans les absorbeurs de calories(5)par rapport aux différents dispositifs classiques à simple effet de serre.

4 - Capteur solaire selon les revendications 1 , 2,et 3,caractérisé en ce que les absorbeurs de calories (5)seront constitués par des tubes munis d'ailettes en plaques carrées ou rectangulaires,de préférence métalliques en cuivre.Ils pourront également être réalisés en produits de synthèse.

Les ailettes de ces absorbeurs seront disposées:en étoile sous forme de rayons extérieurs par rapport au tube véhiculant le fluide caloporteur,en créneaux dans chaque rangée,et en quinconce les unes par rapport aux autres.

L'ensemble tube-ailettes(5)sera de teinte sombre mate à revêtement sélectif.

Ces tubes à ailettes seront raccordés à un tube collecteur d'amenée d'eau froide(6)(bas) et à un tube collecteur d'eau réchauffée(7)(haut)noyés dans l'isolant (3).L'échange thermique entre,rayons solaires incidents ou diffus,absorbeurs et fluide caloporteur,est plus rapide du fait que les surfaces dans leur totalité sont

-5-

soumises au rayonnement.

5 - Capteur solaire selon les revendications 1,2, 3 et 4,caractérisé en ce que les faces arrières des éléments semi-cylindriques(4ter)sont réfléchissantes.Elles sont prévues en métal poli inaltérable de catégorie grand brillant.

Ces éléments réfléchissants permettent aux rayons solaires ayant traversés le vitrage de protection (2),les éléments transparents semi-cylindriques en verre ou en produits de synthèse(4bis),puis les créneaux entre les ailettes,d'être réfléchis sur l'ensemble des surfaces tubes-ailettes des absorbeurs(5).

6 - Capteur solaire selon les revendications 1 à 5 caractérisé par le fait qu'il peut éventuellement être équipé d'un double vitrage de protection(2bis),pouvant être également réalisé en produit de synthèse,séparé par une lame d'air.

7 - Capteur solaire selon les revendications 1 et 6,caractérisé en ce qu'il peut également fonctionner sans l'emploi impératif des demi-cylindres(4bis) ou demi-coquilles (11) transparentes.

0070747

fig.1

0070747

fig. 2

3/6

0070747

fig.3

9  2                8      4    4$^{bis}$

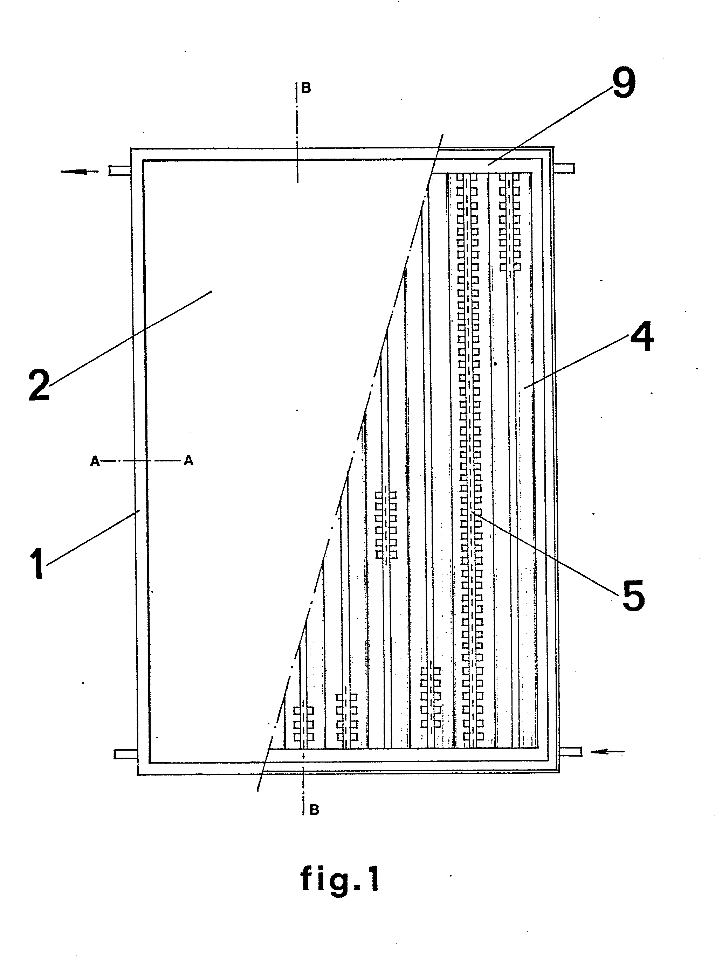

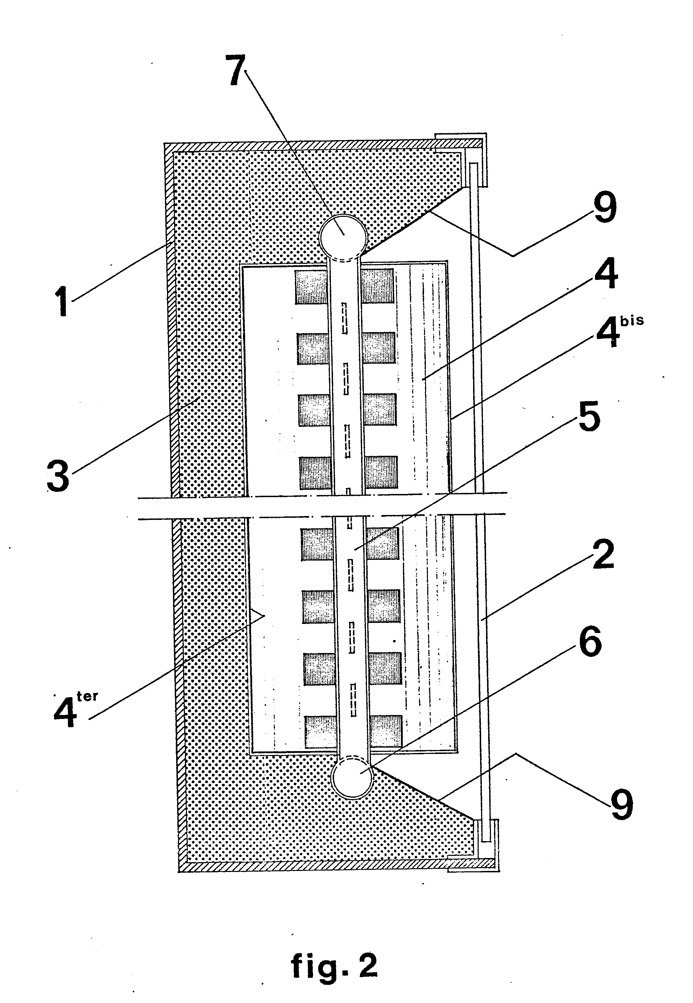

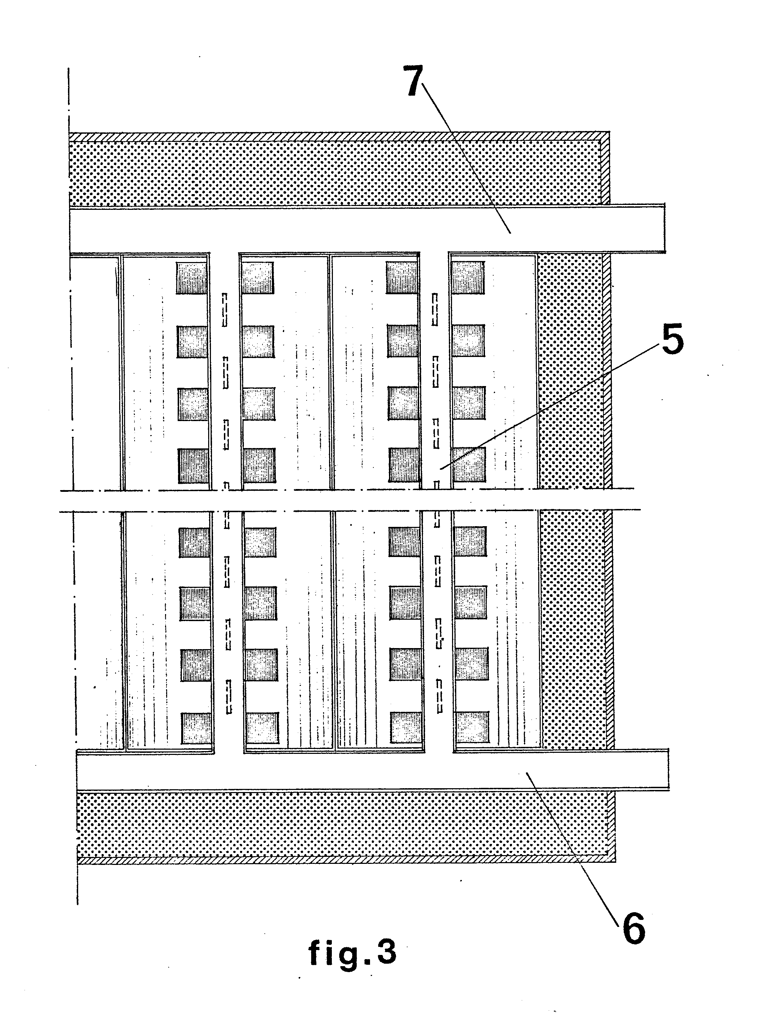

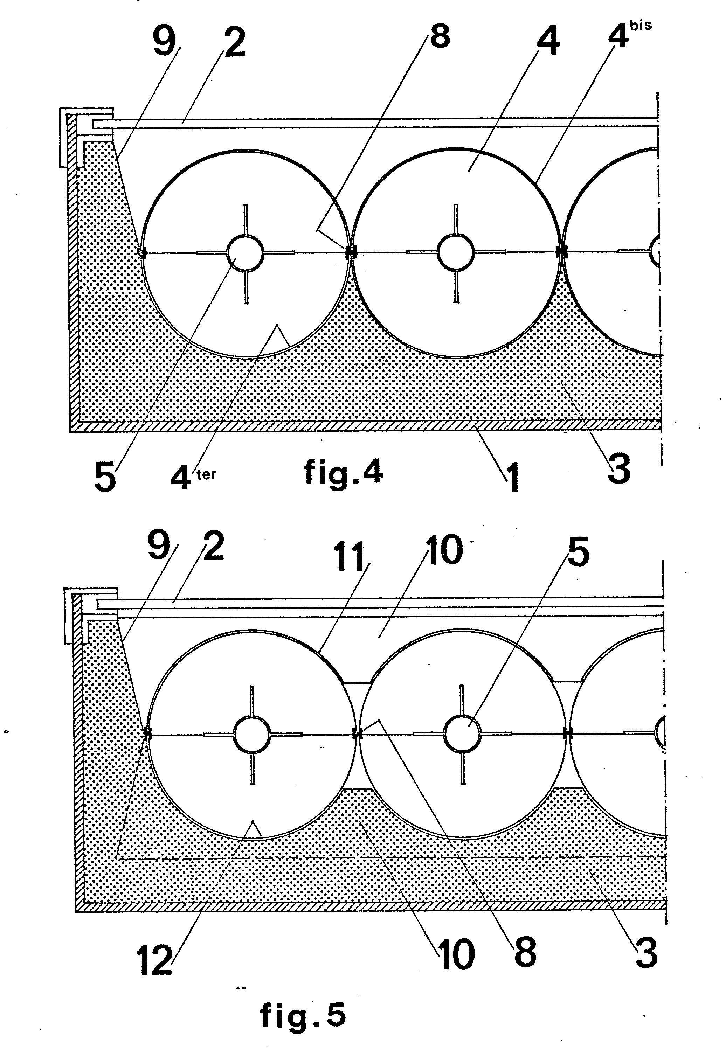

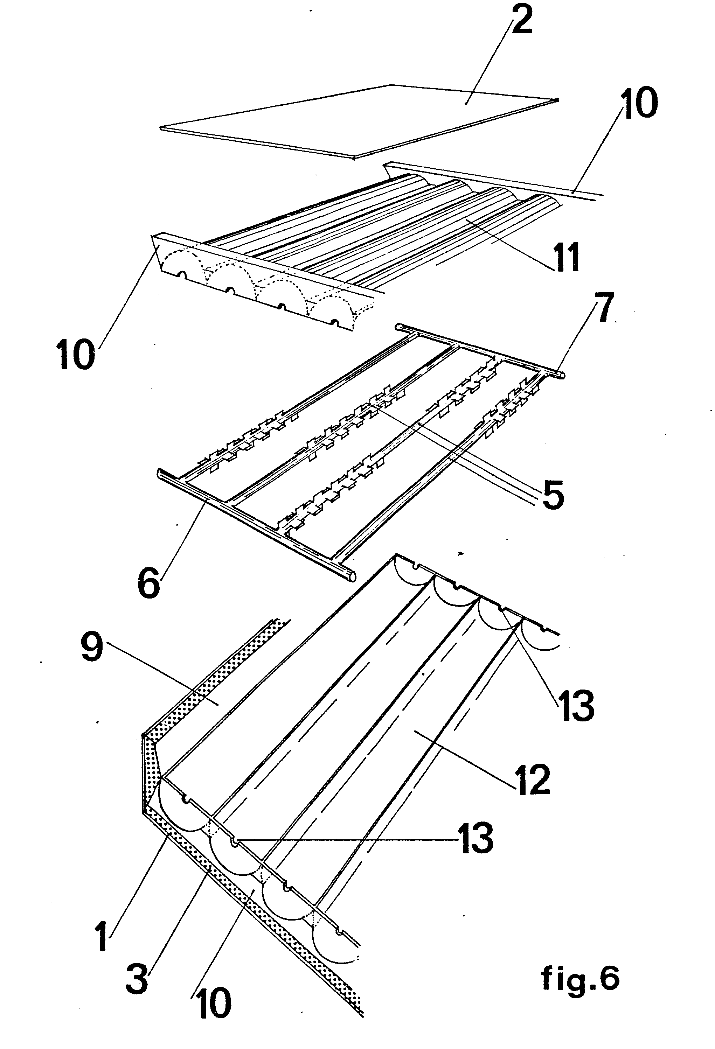

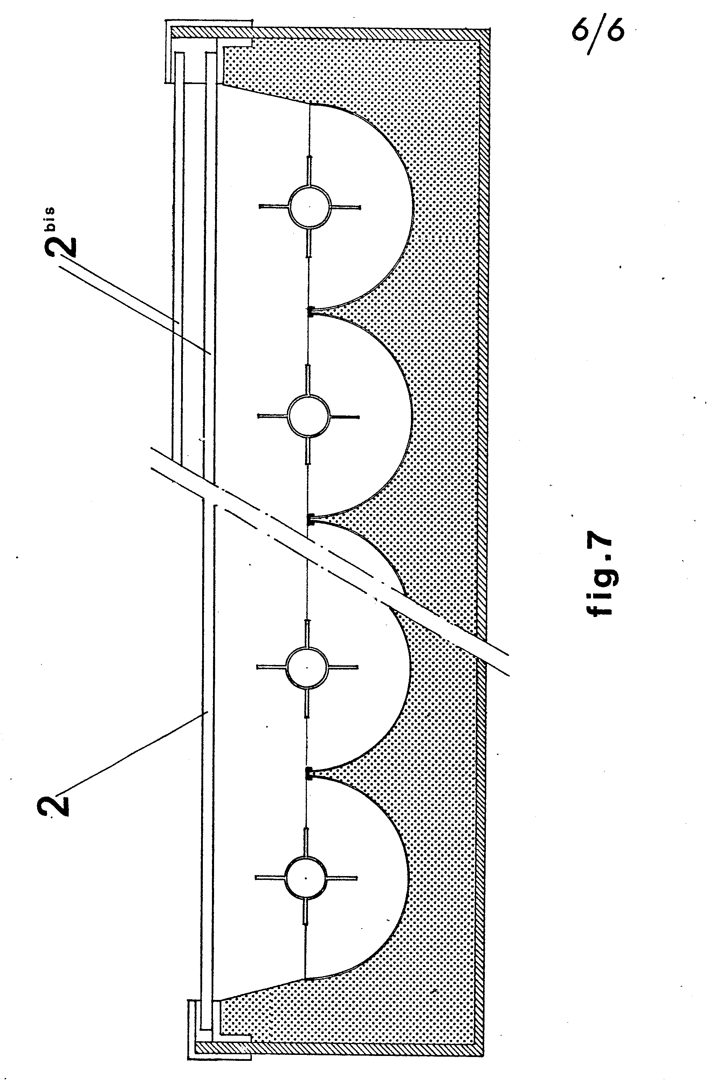

5   4$^{ter}$      fig.4        1      3

9  2      11    10        5

12          10   8    3

fig.5

fig.6

**2**

**2**bis

fig.7

0070747

0070747

Office européen
des brevets

**RAPPORT DE RECHERCHE EUROPEENNE**

Numéro de la demande

EP 82 40 1137

## DOCUMENTS CONSIDERES COMME PERTINENTS

| Categorie | Citation du document avec indication, en cas de besoin, des parties pertinentes | Revendication concernée | CLASSEMENT DE LA DEMANDE (Int. Cl. 3) |
|---|---|---|---|
| A | --- <br> US-A-3 866 285 (CLARK) <br><br> * colonne 2, lignes 13-68; colonne 3, lignes 1-21; figures 1,2 * | 1,2,3, 6,7 | F 24 J 3/02 |
| A | --- <br> FR-A-2 349 107 (ANVAR) <br><br> * page 3, lignes 3-7; page 4, lignes 9-21; page 5, ligne 4-14; figures 1-4 * | 1,2,3, 4,5,7 | |
| A | --- <br> FR-A-2 381 979 (PERNET) <br> * page 2, ligne 20 à page 4, ligne 35; figures 1-3 * | 1,2,3 | |
| A | --- <br> FR-A-2 429 395 (EURATOM) <br><br> * page 2, lignes 1-35; page 3 en entier; figures 1,3 * | 1,2,3, 4,5 | DOMAINES TECHNIQUES RECHERCHES (Int. Cl. 3) <br><br> F 24 J |
| A | --- <br> FR-A-2 444 237 (S.A.U.C.) <br> * page 5, lignes 29-37; figure 7 * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 28-10-1982 | PERROTTA A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82